# EUROPÄISCHE PATENTSCHRIFT

(11) **EP 1 336 785 B1**
(45) Veröffentlichungstag und Bekanntmachung des Hinweises auf die Patenterteilung: **10.05.2006**
(21) Anmeldenummer: 03003024.1
(22) Anmeldetag: 12.02.2003
(51) Int. Cl.: F16K 31/08, F16K 31/06

(54) **Bistabiles elektromagnetisches Ventil**
Bistable electromagnetic valve
Soupape électromagnétique bistable

(30) Priorität: 19.02.2002 DE 10206778; 16.04.2002 DE 10216687
(43) Veröffentlichungstag der Anmeldung: 20.08.2003
(73) Patentinhaber: Schrott, Harald, 88131 Lindau (DE)
(72) Erfinder: Ott, Hubert, 88212 Ravensburg (DE); Grau, Thomas, 88260 Argenbühl (DE)
(74) Vertreter: Roth, Klaus

(56) Entgegenhaltungen:
- EP-A- 0 485 800
- US-A- 5 516 424

## Beschreibung

Die Erfindung betrifft ein bistabiles elektromagnetisches Ventil nach dem Oberbegriff des Anspruchs 1.

Derartige Ventile werden beispielsweise in Kältemittelkreisläufen verwendet, wie sie in den Druckschriften DE 37 18 490 oder EP 10 54 200 beschrieben sind.

Bei solchen Ventilen wird eine bistabile Situation dadurch erreicht, dass Permanentmagnete außerhalb des Ventilgehäuses neben der Ventilkammer oder neben den Polschuhen angeordnet sind, so dass der Ventilkörper zwei Endpositionen an den Polschuhen besitzt, in denen er durch diese Permanentmagnete gehalten wird.

An solche Ventile werden hohe Anforderungen im Hinblick auf die Dichtigkeit sowie Dauerstabilität gestellt. Die Ventile werden nach der Herstellung im Herstellungsbetrieb in der Regel in einem anderen Betrieb in den Kältemittelkreislauf eingebaut, so dass es bei Funktionsstörungen schwierig ist, die Ursache hierfür festzustellen.

Darüber hinaus sind weitere bistabile Ventile gemäß der Druckschrift DIE 190 22 466 bekannt, die in Kältemittelkreisläufen einsetzbar sind. Aus der Druckschrift US 5,516,424 ist ein Brennstoffeinspritzventil mit einem Schmutzfilter bekannt.

Aufgabe der Erfindung ist es daher, ein Ventil insbesondere für einen Kältemittelkreis vorzuschlagen, das bei Schmutzeintrag weniger störanfällig ist.

Diese Aufgabe wird ausgehend von einem Ventil der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich die Erfindung dadurch aus, dass das Ventil ein Schmutzfilter umfasst, das als magnetisches Schmutzfilter ausgebildet ist.

Der Erfindung liegt demnach die Erkenntnis zugrunde, dass Funktionsstörungen häufig auf einem Schmutzeintrag basieren, der nach dem Einbau in den Kältemittelkreislauf in das Ventil eingetragen wird. Erfindungsgemäß wird ein solcher Schmutzeintrag an die kritischen Stellen des Ventils, das heißt in den Bereich des Ventilkörpers und dessen Dichtsitz durch das Schmutzfilter verhindert.

Ein magnetisches Schmutzfilter ist in der Lage, magnetische oder magnetisierbare Schmutzpartikel zurückzuhalten, die beispielsweise an der Innenwandung der Rohre des Kältemittelkreislaufs abgespült oder bei der Montage des Fluidkreislaufs zum Beispiel durch Verlöten in das Innere des Kreislaufs gelangen können. Gerade diese magnetischen oder magnetisierbaren Schmutzpartikel sind jedoch besonders kritisch im Hinblick auf Funktionsstörungen, da diese Partikel ohne vorherige Rückhaltemaßnahmen aufgrund der für die bistabile Ausführung erforderlichen Permanentmagnete in der Ventilkammer verbleiben und dort dauerhaft die Dichtigkeit des Ventils beinträchtigen und zugleich den Verschleiß erhöhen.

Besonders wirksam ist ein magnetisches Schmutzfilter, wenn es im unmittelbaren Kontakt mit Fluid steht. Daher wird in einer besonders vorteilhaften Ausführungsform der Erfindung ein Permanentmagnet innerhalb des Ventilgehäuses bzw. innerhalb dessen Anschlussleitung angeordnet.

In einer Weiterbildung dieser Ausführungsform wird ein Ringmagnet als Schmutzfilter vorgesehen. Ringmagnete sind kostengünstig im Handel erhältlich und bieten bei guten Montagemöglichkeiten im Innern eines Rundrohres eine große mit Schmutzpartikeln beladbare Oberfläche auf, wobei zugleich ein ausreichend großer Strömungsquerschnitt für das Fluid, beispielsweise Kältemittel, vorhanden ist.

Vorteilhafterweise wird das Schmutzfilter auf der Zuflussseite der Ventilkammer im Ventilgehäuse angeordnet. Auf diese Weise werden die kritischen Bauelemente, das heißt der Ventilkörper und die Ventilsitze bzw. insgesamt die den Ventilkörper beinhaltende Ventilkammer zuverlässig vor einem externen Schmutzeintrag nach Fertigstellung des Fluidkreislaufs geschützt, da nur gereinigtes Fluid in die Ventilkammer gelangen kann.

Vorteilhafterweise wird hierzu das Schmutzfilter im Anschluss an einen Polschuh angeordnet. Diese Position stellt die der Ventilkammer am nächsten liegende Anordnung für ein von der Ventilkammer separates Schmutzfilter dar, so dass wirklich weitgehend alles bei Inbetriebnahme des Fluidkreislaufs in die Ventilkammer gelangende Fluid gefiltert ist.

Ein erfindungsgemäßes Schmutzfilter kann fest, das heißt nicht austauschbar oder nur mit dem gesamten Ventil austauschbar in das Ventilgehäuse gebaut werden, sofern die Filterkapazität für eine einmalige Reinigung des Fluidkreislaufs ausreichend ist.

Üblicherweise werden Filter in Fluidkreisläufen so ausgestaltet, dass sie austauschbar oder einer Reinigung zugänglich sind, da die Filter auf die Dauer verstopfen. Der Erfindung liegt jedoch die weitere Erkenntnis zugrunde, dass wenn ein solches Ventil stets in Kreisläufen eingesetzt wird, die für die Lebensdauer des Ventils in der Regel geschlossen bleiben, sich die Möglichkeit ergibt, ein Schmutzfilter fest in das Ventil zu verbauen. Dieses Filter muss dabei jedoch eine ausreichende Filterkapazität für eine einmalige Reinigung des gesamten im Kreislauf befindlichen Fluids aufweisen.

Da nach dieser einmaligen Reinigung keine weitere Schmutzfracht am Filter ankommt, kann ein Verstopfen ausgeschlossen werden, so dass der Austausch oder die Reinigung des Filters nicht erforderlich ist.

In einer anderen Ausführungsform der Erfindung wird ein mechanisches Filter alleine oder in Kombination mit einem magnetischen Filter vorgesehen. Ein mechanisches Filter ist in der Lage, auch nicht magnetische oder nicht magnetisierbare Schmutzpartikel zurückzuhalten und somit für eine vollständigere Reinigung des Kältemittels zu sorgen.

Besonders vorteilhaft ist die Kombination eines mechanischen Filters mit einem bezogen auf die Strömungsrichtung vorgeschalteten Magnetfilter, da durch Vorabfilterung der magnetischen bzw. magnetisierbaren Schmutzpartikel die Belastung des mechanischen Filters verringert wird, so dass dessen Dimensionierung kleiner ausführbar ist.

In einer vorteilhaften Ausführungsform wird der Magnetfilter zugleich als Halterung für das mechanische Filter verwendet, so dass eine separate Halterung am Ort des Magnetfilters entfallen kann.

Insbesondere in Kombination mit einem Ringmagneten wird das mechanische Filter vorzugsweise als Rohrsieb ausgebildet. Auf ein solches Rohrsieb kann beispielsweise ein Ringmagnet gesteckt werden, der passgenau an der Innenwandung des Zuflusses zur Ventilkammer anliegt. Auf diese Weise ist zum Einen das Rohrsieb an dieser Stelle fixiert und zum Anderen der Querschnitt des Zuflusses außerhalb des Rohrsiebes durch den Ringmagneten verschlossen, so dass das Fluid nur in den Innenraum des Rohrsiebes einströmen kann.

Insbesondere in Verbindung mit den oben genannten Merkmalen wird der Innenraum des Rohrsiebes mit dem Zufluss des Fluids, zum Beispiel des Kältemittels, und der Außenraum des Rohrsiebs mit der Ventilkammer verbunden. Die zurückgehaltenen Schmutzpartikel sammeln sich in diesem Fall im Innenraum des Rohrsiebes an, wobei gegebenenfalls magnetische bzw. magnetisierbare Partikel wie oben angegeben bereits an dem Permanentmagneten zurückgehalten werden.

Die Sieblöcher eines solchen mechanischen Filters werden beispielsweise mit einem Durchmesser in der Größenordnung zwischen 50 µ und 80 µ ausgebildet. Eine solche Gestaltung des magnetischen Filters hat sich in Tests von Ventilen in Kältemittelkreisläufen als eine besonders günstige Ausführung im Hinblick auf gute Filtereigenschaft und ausreichenden Durchfluss erwiesen.

Die Verwendung eines Rohrsiebs als mechanisches Filter bietet neben der oben angeführten günstigen Anordnung (in Strömungsrichtung betrachtet) vor der Ventilkammer zudem die Möglichkeit, dass die Filterkapazität durch eine entsprechende axiale Länge des Rohrsiebs groß genug gewählt werden kann.

Darüber hinaus kann die Filterkapazität eines Rohrsiebs durch entsprechende Querschnittgestaltung, die sich als Oberflächenvergrößerung auswirkt, verbessert werden. So kann beispielsweise ein solches Rohrsieb mit einem gewellten oder gefalteten Querschnitt ausgebildet werden.

Eine besonders vorteilhafte Ausführungsform ist ein Rohrsieb mit einem sternförmigen Querschnitt, da sich hier bei guter Oberflächenvergrößerung eine rundum gleichmäßige Strömung ausbilden kann.

Ein Ausführungsbeispiel der Erfindung ist in der Zeichnung dargestellt und wird anhand der Figuren nachfolgend näher erläutert.

Im Einzelnen zeigen
- Fig. 1: einen Querschnitt durch ein 2/2 Wegeventil gemäß der Erfindung und
- Fig. 2: einen Querschnitt durch einen 3/2 Wegeventil gemäß der Erfindung.

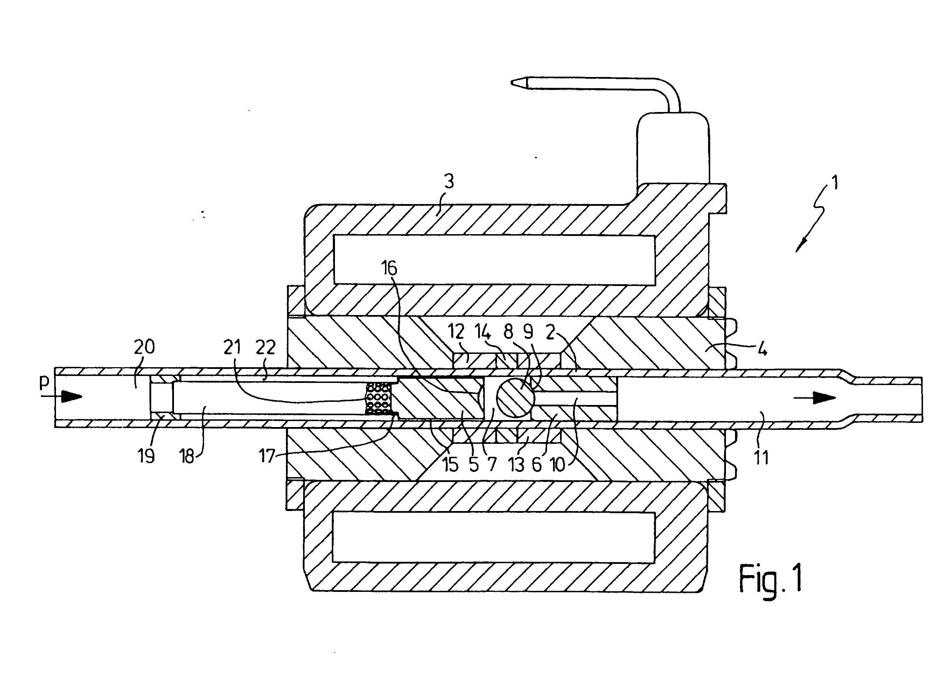

Das Ventil 1 gemäß Figur 1 umfasst ein rohrförmiges Ventilgehäuse 2, das eine Steuerspule 3 vollständig durchsetzt. Adapterstücke 4 sorgen hierbei für einen guten Sitz im Ventilgehäuse 2 und sind zugleich als Flussleitelemente für einen erhöhten Magnetfluss durch Polschuhe 5, 6 sowie durch eine Ventilkammer 7 ausgebildet. Im Inneren der Ventilkammer 7 befindet sich ein kugelförmiger Ventilkörper 8, der in der dargestellten Position auf dem Kugelsitz 9 des Polschuhs 6 aufliegt und dabei eine Durchgangsbohrung 10 verschließt. Die Durchgangsbohrung 10 mündet in die Abflussleitung 11 des Ventils 1.

Außerhalb des Ventilgehäuses 2 liegende Ringmagnete 12, 13 sorgen für das bistabile Verhalten des Ventils und sind durch einen Distanzring 14 zwischen den Adapterstücken 4 fixiert.

Der Polschuh 5 weist an seinem Außenumfang Ausnehmungen oder Abflachungen auf, durch die sich Fluidkanäle 15 zwischen dem Polschuh 5 und dem Ventilgehäuse 2 ins Innere der Ventilkammer 7 ergeben. Die Fluidkanäle könnten auch durch Bohrungen im Polschuh 5 realisiert werden, deren zuflussseitige Öffnungen im Ringbereich zwischen einem Rohrsieb 18 und der Außenwand des Ventilgehäuses 2 liegen. Der Polschuh 5 weist weiterhin einen Kugelsitz 16 auf, um eine definiert Endlage des Ventilkörpers 8 in der zweiten, nicht dargestellten Endposition zu bewirken.

Der Polschuh 5 umfasst eine Abstufung 17, auf die das Rohrsieb 18 aufgeschoben ist. Am gegenüberliegenden Ende ist das Rohrsieb 18 in einem als Ringmagnet ausgebildeten Magnetfilter 19 fixiert. Der rohrförmige Bereich des Ventilgehäuses 2 in dem sich das Rohrsieb 18 und der Magnetfilter 19 befinden, dient als Zuflussleitung 20 für das entsprechende Fluid, das heißt insbesondere für Kältemittel.

Einströmendes Fluid (siehe Pfeil P) gelangt zunächst in den Bereich des Magnetfilters 19, das als Ringmagnet ausgebildet ist und direkt mit dem Fluid in Kontakt kommt. Dadurch werden bereits am Magnetfilter 19 weit von der Ventilkammer 7 beabstandet magnetische oder magnetisierbare Schmutzpartikel dauerhaft fixiert.

Anschließend gelangt das Fluid ins Innere des Rohrsiebs 18, das stirnseitig am gegenüberliegenden Ende durch den Polschuh 5 bzw. dessen Abstufung 17 verschlossen ist. Die Fluidströmung muss im Rohrsieb 18 demnach radial nach Außen erfolgen, wobei Schmutzpartikel, die größer als die Sieböffnungen 21 des Rohrsiebs 18 sind, im Innenraum des Rohrsiebs 18 zurückgehalten werden. Somit gelangt nur gereinigtes Fluid in den Außenraum 22 zwischen Rohrsieb 18 und Ventilgehäuse 2. Von dort gelangt das Fluid über die Fluidkanäle 15 ins Innere der Ventilkammer 7.

Die Strömung findet natürlich nur bei geöffnetem Ventil statt, das heißt in der Schaltstellung, in der der Ventilkörper 8 auf dem Kugelsitz 16 aufliegt und die Durchgangsbohrung 10 freigegeben ist.

Ein erfindungsgemäßes Ventil 1 kann problemlos in einen Fluidkreislauf, zum Beispiel einen Kältemittelkreislauf eingebaut werden, der fertigungsbedingt Schmutzpartikel beinhaltet, die für herkömmliche Kältemittelventile nicht verträglich sind und Funktionsstörungen hervorrufen.

Die Anwendung des Ventils 1 zielt auf geschlossene Fluidkreisläufe ab, die über die Lebensdauer des Ventils 1 betrachtet nach der Fertigung geschlossen bleiben. Die Filterkapazität des Filtersystems bestehend aus Rohrfilter 18 und Magnetfilter 19 ist hierbei so auszulegen, dass eine einmalige komplette Reinigung des im Kreislauf befindlichen Fluids ohne Verstopfung folgen kann.

Auf diese Weise, das heißt durch die Verwendung eines Filters 18, 19 in der Zuflussleitung 20 des Ventilgehäuses 2 und insbesondere durch die unmittelbare Anordnung neben der Ventilkammer 7 wird ein Schmutzeintrag in die Ventilkammer 7 zuverlässig soweit ausgeschlossen, dass eine dauerhaft dichte und verschleißarme Funktion des Ventils 1 gewährleistet werden kann.

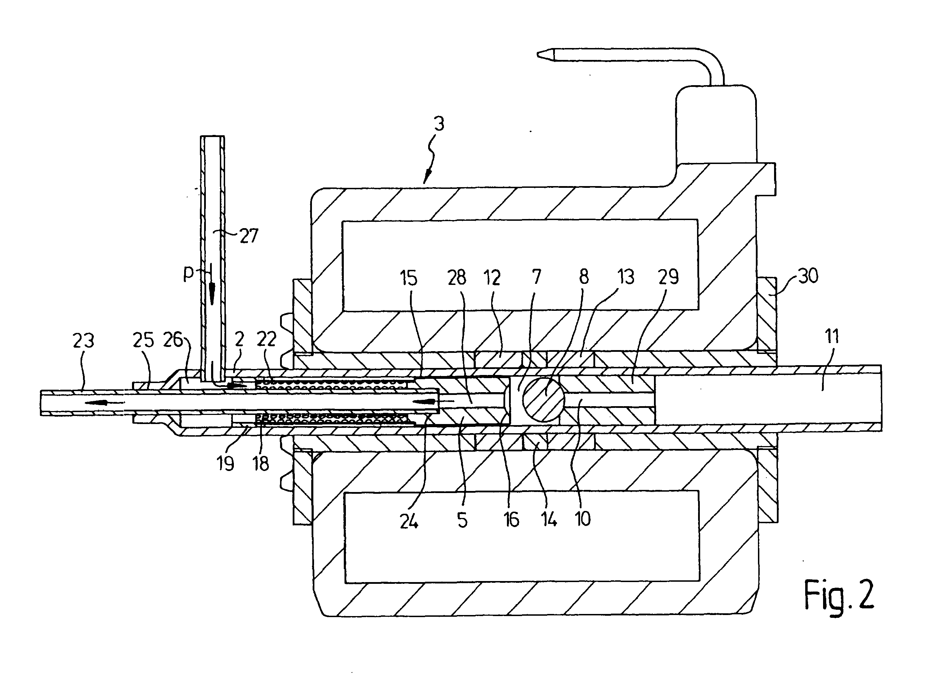

Figur 2 entspricht im Wesentlichen dem vorgenannten Ausführungsbeispiel, wobei nunmehr abweichend eine zweite, rohrförmige Abflussleitung 23 ins Innere des Ventilgehäuses 2 bis zum Polschuh 5 geführt und dort in einer entsprechenden Bohrung 24 dicht fixiert ist. Das Ventilgehäuse 2 und die Abflussleitung 23 sind an einer Dichtstelle 25 dicht gegeneinander abgeschlossen, beispielsweise verpresst oder verlötet.

Somit ergibt sich ein Zwischenraum 26 zwischen der Abflussleitung 23 und dem Ventilgehäuse 2, an dem eine Zuflussleitung 27 angeschlossen ist. Die Zuflussleitung 27 kann beispielsweise in einer entsprechenden Öffnung des Ventilgehäuses 2 verlötet sein.

In dieser Ausführungsform umfasst auch der Polschuh 5 eine Durchgangsbohrung 28, die die Ventilkammer 7 über die Fluidkanäle 15 mit dem Zwischenraum 26 verbinden.

Das Fluid bzw. Kältemittel kann in Richtung des Pfeils P in den Zwischenraum 26 und von dort durch das Magnetfilter 19 in den nunmehr ringförmigen Innenraum zwischen dem Rohrsieb 18 und der Abflussleitung 23 gelangen. Anschließend strömt das Fluid radial nach Außen in den Außenraum 22 zwischen Rohrsieb 18 und Ventilgehäuse 2, von wo es über die Fluidkanäle 15 in die Ventilkammer 7 gelangt.

Je nach Schaltstellung des Ventilkörpers 8 fließt das Fluid dann entweder über die Abflussleitung 23 oder über die Abflussleitung 11 ab. In der dargestellten Schaltstellung ist die Durchgangsbohrung 28 des Polschuhs 5 geöffnet, das heißt der Abfluss geschieht über die Abflussleitung 23.

Durch einen Steuerpuls der Steuerspule 3 kann der Ventilkörper 8 auf den gegenüberliegenden Kugelsitz 16 gebracht werden, wodurch die Durchgangsbohrung 28 verschlossen und die Durchgangsbohrung 10 geöffnet wird. In dieser beschriebenen, jedoch nicht dargestellten Schaltstellung fließt das Fluid über die Abflussleitung 11 ab.

Anstelle der Adapterstücke 4, die im Innern der Steuerspule 3 eine konusförmige Abflussfläche aufweisen, sind vorliegend hülsenförmige Flussleitbleche 29 zur Führung des Magnetflusses im Inneren der Steuerspule 3 vorgesehen, die den Zwischenraum zwischen Ventilgehäuse 2 und Steuerspule 3 vollständig ausfüllen. Die Flussleitbleche 29 sind jeweils mit einer Abschlussplatte 30 verbunden, die ihrerseits mit nicht näher dargestellten, sogenannten Jochblechen verbunden ist bzw. in diese übergeht. Die Flussleitbleche 29 können gemeinsam mit der Abschlussplatte 30 und der gesamten, nicht näher dargestellten Jochblechanordnung aus einem Flachmaterial gestanzt und gebogen bzw. gewickelt werden.

### Bezugszeichenliste:

- 1: Ventil
- 2: Ventilgehäuse
- 3: Sternspule
- 4: Adapterstücke
- 5: Polschuh
- 6: Polschuh
- 7: Ventilkammer
- 8: Ventilkörper
- 9: Kugelsitz
- 10: Durchgangsbohrung
- 11: Abflussleitung
- 12: Ringmagnet
- 13: Ringmagnet
- 14: Distanzring
- 15: Fluidkanal
- 16: Kugelsitz
- 17: Abstufung
- 18: Rohrsieb
- 19: Magnetfilter
- 20: Zuflussleitung
- 21: Sieböffnung
- 22: Außenraum
- 23: Abflussleitung
- 24: Bohrung
- 25: Dichtstelle
- 26: Zwischenraum
- 27: Zuflussleitung
- 28: Durchgangsbohrung
- 29: Flussleitblech
- 30: Abschlussplatte

## Patentansprüche

1. Bistabiles elektromagnetisches Ventil mit einer zwischen zwei Polschuhen angeordneten Ventilkammer und einem darin zwischen zwei Endstellungen verschiebbaren Ventilkörper, der als Magnetanker für wenigstens einen Permanentmagneten und für wenigstens eine Steuerspule ausgebildet ist, wobei das Ventil (1) ein Schmutzfilter (18, 19) umfasst, **dadurch gekennzeichnet, dass** ein magnetisches Schmutzfilter (19) vorgesehen ist.

2. Ventil nach Anspruch 1, **dadurch gekennzeichnet, dass** das Schmutzfilter (18, 19) auf der Zuflussseite (20) der Ventilkammer (7) im Ventilgehäuse (2) angeordnet ist.

3. Ventil nach einem der vorgenannten Ansprüche, **dadurch gekennzeichnet, dass** das Schmutzfilter (18, 19) unmittelbar neben einem Polschuh (5) angeordnet ist.

4. Ventil nach einem der vorgenannten Ansprüche, **dadurch gekennzeichnet, dass** das Schmutzfilter (18, 19) fest im Ventilgehäuse (2) verbaut ist.

5. Ventil nach einem der vorgenannten Ansprüche, **dadurch gekennzeichnet, dass** das magnetische Schmutzfilter (19) als Permanentmagnet mit unmittelbarem Fluidkontakt ausgebildet ist.

6. Ventil nach einem der vorgenannten Ansprüche, **dadurch gekennzeichnet, dass** das magnetische Schmutzfilter (19) als Ringmagnet ausgebildet ist.

7. Ventil nach einem der vorgenannten Ansprüche, **dadurch gekennzeichnet, dass** ein mechanisches Filter (18) vorgesehen ist.

8. Ventil nach einem der vorgenannten Ansprüche, **dadurch gekennzeichnet, dass** ein mechanisches Filter (18) und ein magnetisches Filter (19) vorgesehen sind.

9. Ventil nach einem der.vorgenannten Ansprüche, **dadurch gekennzeichnet, dass** das Magnetfilter (19) als Halterung für das mechanische Filter (18) ausgebildet ist.

10. Ventil nach einem der vorgenannten Ansprüche, **dadurch gekennzeichnet, dass** das mechanische Filter (18) als Rohrsieb ausgebildet ist.

11. Ventil nach einem der vorgenannten Ansprüche, **dadurch gekennzeichnet, dass** der Innenraum des Rohrsiebs (18) mit dem Zufluss (20) und der Außenraum (22) mit der Ventilkammer (7) verbunden ist.

12. Ventil nach einem der vorgenannten Ansprüche, **dadurch gekennzeichnet, dass** die Sieböffnungen (21) einen Durchmesser im Bereich zwischen 50µ und 80µ aufweisen.

13. Ventil nach einem der vorgenannten Ansprüche, **dadurch gekennzeichnet, dass** das Rohrsieb (18) einen gewellten oder gefalteten Querschnitt aufweist.

14. Ventil nach einem der vorgenannten Ansprüche, **dadurch gekennzeichnet, dass** das Rohrsieb (18) einen sternförmigen Querschnitt aufweist.

15. Ventil nach einem der vorgenannten Ansprüche, **dadurch gekennzeichnet, dass** das Magnetfilter (19) auf der Zuflussseite (20) des mechanischen Siebs (18) angeordnet ist.

16. Kälteerzeugungskreis für eine Kühlanlage, insbesondere mit mehreren Kühlräumen, einem Kompressor, einem Kondensator, mehreren Verdampfern die wenigstens einem der Kühlräume zugeordnet sind, sowie wenigstens einem elektrischen Steuerventil zur Verbindung des Kondensators mit einem oder mehreren der Verdampfern entsprechend vorbestimmten Betriebsarten, **dadurch gekennzeichnet, dass** das Steuerventil (1) gemäß einem der vorgenannten Ansprüche ausgebildet ist.

17. Haushaltsgerät mit einem Kälteerzeugungskreis, insbesondere Kühlschrank oder Kühltruhe, **dadurch gekennzeichnet, dass** ein Kälteerzeugungskreis mit einem Ventil gemäß einem der Ansprüche 1 bis 15 vorgesehen ist.

## Claims

1. Bistable electromagnetic valve, with a valve chamber arranged between two pole shoes and a valve body displaceable therein between two end positions, which is in the form of a magnet armature for at least one permanent magnet and for at least one control coil, wherein the valve (1) surrounds a dirt filter (18, 19), **characterised in that** a magnetic dirt filter (19) is provided.

2. Valve according to claim 1, **characterised in that** the dirt filter (18, 19) is arranged on the inflow side (20) of the valve chamber (7) in the valve housing (2).

3. Valve according to one of the preceding claims, **characterised in that** the dirt filter (18, 19) is positioned directly adjacent to a pole shoe (5).

4. Valve according to one of the preceding claims, **characterised in that** the dirt filter (18, 19) is permanently installed in the valve housing (2).

5. Valve according to one of the preceding claims, **characterised in that** the magnetic dirt filter (19) is designed as a permanent magnet in direct contact with the fluid.

6. Valve according to one of the preceding claims, **characterised in that** the magnetic dirt filter (19) is designed as an annular magnet.

7. Valve according to one of the preceding claims, **characterised in that** a mechanical filter (18) is provided.

8. Valve according to one of the preceding claims, **characterised in that** a mechanical filter (18) and a magnet filter (19) are provided.

9. Valve according to one of the preceding claims, **characterised in that** the magnet filter (19) is designed as a mount for the mechanical filter (18).

10. Valve according to one of the preceding claims, **characterised in that** the mechanical filter (18) is designed as a tubular sieve.

11. Valve according to one of the preceding claims, **characterised in that** the inner chamber of the tubular sieve (18) is connected with the inflow (20), and the exterior chamber (22) is connected with the valve chamber (7).

12. Valve according to one of the preceding claims, **characterised in that** the sieve openings (21) have a diameter of in the range of between 50 µ and 80 µ.

13. Valve according to one of the preceding claims, **characterised in that** the tubular sieve (18) has a corrugated or folded cross-section.

14. Valve according to one of the preceding claims, **characterised in that** the tubular sieve (18) has a star-shaped cross section.

15. Valve according to one of the preceding claims, **characterised in that** the magnet filter (19) is arranged on the inflow side (20) of the mechanical sieve (18).

16. Refrigeration circuit for a refrigeration system, in particular with several refrigerating compartments, a compressor, a condenser, several evaporators, allocated to at least one of the refrigerating compartments, as well as at least one electric control valve for connecting the condenser with one or more of the evaporators according to predetermined operating modes, **characterised in that** the control valve (1) is designed according to one of the preceding claims.

17. Household appliance with a refrigeration circuit, in particular a refrigerator or freezer, **characterised in that** a refrigeration circuit is provided with a valve according to one of claims 1 to 15.

## Revendications

1. Soupape électromagnétique bistable avec une chambre de soupape disposée entre deux pièces polaires et un corps de soupape pouvant s'y déplacer entre deux positions de fin de course, lequel corps est configuré comme une armature magnétique pour au moins un aimant permanent et pour au moins une bobine de commande, la soupape (1) comprenant un filtre d'impuretés (18, 19),
**caractérisée en ce qu'**un filtre d'impuretés magnétique (19) est prévu.

2. Soupape selon la revendication 1,
**caractérisée en ce que** le filtre (18, 19) est disposé du côté admission (20) de la chambre de soupape (7) dans le boîtier de soupape (2).

3. Soupape selon l'une des revendications précitées,
**caractérisée en ce que** le filtre (18, 19) est disposé directement à côté d'une pièce polaire (5).

4. Soupape selon l'une des revendications précitées,
**caractérisée en ce que** le filtre (18, 19) est solidement incorporé au boîtier de soupape (2).

5. Soupape selon l'une des revendications précitées,
**caractérisée en ce que** le filtre magnétique (19) est réalisé sous la forme d'un aimant permanent à contact fluidique direct.

6. Soupape selon l'une des revendications précitées,
**caractérisée en ce que** le filtre magnétique (19) est un aimant annulaire.

7. Soupape selon l'une des revendications précitées,
**caractérisée en ce qu'**un filtre mécanique (18) est prévu.

8. Soupape selon l'une des revendications précitées,
**caractérisée en ce qu'**un filtre mécanique (18) et un filtre magnétique (19) sont prévus.

9. Soupape selon l'une des revendications précitées,
**caractérisée en ce que** le filtre magnétique (19) est réalisé sous la forme d'une fixation pour le filtre mécanique (18).

10. Soupape selon l'une des revendications précitées,
**caractérisée en ce que** le filtre mécanique (18) est un tamis tubulaire.

11. Soupape selon l'une des revendications précitées,
**caractérisée en ce que** l'espace intérieur du tamis tubulaire (18) est relié à l'admission (20) et l'espace extérieur (22) est relié à la chambre de soupape (7).

12. Soupape selon l'une des revendications précitées,
**caractérisée en ce que** les ouvertures de filtrage (21) présentent un diamètre de 50µ à 80µ.

13. Soupape selon l'une des revendications précitées,
**caractérisée en ce que** le filtre tubulaire (18) présente une section transversale ondulée ou pliée.

14. Soupape selon l'une des revendications précitées,
**caractérisée en ce que** le filtre tubulaire (18) présente une section transversale en forme d'étoile.

15. Soupape selon l'une des revendications précitées,
**caractérisée en ce que** le filtre magnétique (19) est disposé du côté admission (20) du filtre mécanique (18).

16. Circuit générateur de froid pour une installation frigorifique, en particulier avec plusieurs chambres froides, un compresseur, un condensateur, plusieurs évaporateurs qui sont affectés au moins à l'une des chambres froides, et au moins une soupape de commande électrique pour raccorder le condensateur à un ou à plusieurs évaporateurs en fonction de types d'exploitation prédéterminés,
**caractérisé en ce que** la soupape de commande (1) est telle que spécifiée sous l'une des revendications précitées.

17. Appareil ménager avec un circuit générateur de froid, en particulier un réfrigérateur ou un congélateur,
**caractérisé en ce qu'**un circuit générateur de froid est prévu avec une soupape telle que spécifiée sous l'une des revendications 1 à 15.
